# EUROPÄISCHE PATENTSCHRIFT

(11) **EP 0 898 552 B1**
(45) Veröffentlichungstag und Bekanntmachung des Hinweises auf die Patenterteilung: **07.08.2002**
(21) Anmeldenummer: 98916887.7
(22) Anmeldetag: 05.03.1998
(51) Int. Cl.: C04B 41/85, C03C 17/00, C03C 8/16, B41M 1/34, G03G 7/00

(54) **VERFAHREN UND FARBZUSAMMENSETZUNGEN ZUR HERSTELLUNG DEKORIERTER KERAMIK- UND GLASERZEUGNISSE**
METHOD AND COLOUR COMPOSITIONS TO PRODUCE DECORATED CERAMIC AND GLASS PRODUCTS
PROCEDE ET COMPOSITIONS COLOREES POUR LA PRODUCTION DE PRODUITS DECORES EN VERRE OU EN CERAMIQUE

(30) Priorität: 05.03.1997 DE 19709011
(43) Veröffentlichungstag der Anmeldung: 03.03.1999
(73) Patentinhaber: Zimmer, Michael, 66133 Saarbrücken (DE)
(72) Erfinder: Zimmer, Michael, 66133 Saarbrücken (DE)
(74) Vertreter: HOFFMANN - EITLE
(86) Internationale Anmeldenummer: EP9801259
(87) Internationale Veröffentlichungsnummer: WO9839272

(56) Entgegenhaltungen:
- EP-A- 0 647 885
- EP-A- 0 851 306
- DE-A- 4 424 459
- DATABASE WPI Section Ch, Week 9612 Derwent Publications Ltd., London, GB; Class A81, AN 96-111644 XP002060200 & JP 08 011 496 A (BROTHER KOGYO KK)
- CHEMICAL ABSTRACTS, vol. 98, no. 22, 30.Mai 1983 Columbus, Ohio, US; abstract no. 184479r, XP000283011 & JP 57 160 689 A (NARUMI CHINA CORP) 4.Oktober 1982

## Beschreibung

Die Erfindung betrifft ein Verfahren zur Herstellung von dekorierten Keramik- und Glaserzeugnissen, keramische Farbzusammensetzungen zur Durchführung des Verfahrens sowie nach diesem Verfahren erhältliche, dekorierte Keramik- und Glaserzeugnisse.

Bei den bekannten Verfahren der eingangs genannten Gattung werden keramische Buntdrucke mittels des Siebdruckverfahrens und in seltenen Fällen auch mittels des Offsetdruckverfahrens auf ein Keramik- oder Glaserzeugnis aufgebracht.

Bei dem im allgemeinen verwendeten Siebdruckverfahren muß zunächst eine Siebdruckschablone hergestellt werden. Dazu wird das Sieb aus feinmaschigem Textil- oder Drahtgewebe, das über einen Druckrahmen gespannt wird, an den bildfreien Stellen mit einer aus Papier geschnittenen, mit Fettusche gezeichneten oder fotografisch hergestellten Schablone abgedeckt. Mittels dieser Siebdruckschablone werden dann die keramischen Farben auf ein Transfermittel, wie z.B. ein mit Gummi-Arabikum beschichtetes Papier, gedruckt. Das gedruckte Muster wird anschließend mit einem Lack überzogen, und das derart vorbereitete Transfermittel wird anschließend angefeuchtet, um die Gummi-Arabikum-Beschichtung zu lösen, und das Druckmuster wird mit der Lackschicht von dem Papierträger abgezogen und dann auf das Keramik- oder Glaserzeugnis in gewünschter Position plaziert.
Schließlich wird dann das Erzeugnis in an sich bekannter Weise gebrannt, was zu einer Verschmelzung der keramischen Farben mit dem Erzeugnis führt. Es wird somit ein dauerhafter Druck auf dem Keramik- bzw. Glaserzeugnis erzielt.

Die Herstellung der Siebdruckschablone bei dem bekannten Verfahren ist sehr aufwendig und für Einzelanfertigungen unrentabel. Zudem muß mit Hilfe einer Rakel die Druckfarbe durch die offenen Stellen der Siebdruckschablone manuell oder in Siebdruckmaschinen auf den Bedruckstoff, d.h. das Transfermittel, aufgebracht werden. Das Siebdruckverfahren ist weiterhin ein Naßverfahren, bei dem mit Drucköl angepastete, keramische Farbpigmente als Druckfarbe eingesetzt werden, so daß relativ große und teure Maschinen mit Trocknern in klimatisierten Räumen notwendig sind, und weiterhin, insbesondere im Hinblick auf die beim Herstellungsprozeß benötigten Lösungsmittel, große Arbeitsschutz- und Umweltprobleme bestehen. Die in dem Drucköl vorhandenen Lösungsmittel verdampfen relativ leicht, so daß aufwendige und teure Arbeitsschutzmaßnahmen getroffen werden müssen, und zum anderen separate Filterungsanlagen erforderlich sind. Überdies sind beim Siebdruckverfahren, wie auch beim Offsetdruckverfahren, mehrere hintereinander geschaltete Druckvorgänge für die verschiedenen Farben (z.B. Cyan, Magenta, Gelb und Schwarz) erforderlich, was weiterhin zu sehr groß ausgestalteten Anlagen führt.

Desweiteren besteht bei den bekannten Druckverfahren das Problem, daß die Reproduzierbarkeit der Farben bei einer größeren Stückzahl nicht mehr gewährleistet werden kann, und zudem bereits nach einer geringen Stückzahl, d.h. in etwa nach 100 Druckvorgängen, die Siebdruckschablone gereinigt werden muß.

Zum anderen ist bei dem Siebdruckverfahren das Auflösungsvermögen des aufgebrachten Buntdrucks durch das Raster der Siebdruckschablone begrenzt. Dies führt dazu, daß die bedruckten Keramik- oder Glaserzeugnisse häufig bezüglich der Glätte, der Homogenität und der Auflösung des Farbdrucks nicht zufriedenstellend sind. Weiterhin müssen häufig, um eine gewünschte Glätte erzeugen zu können, mehrere Sonderfarben verwendet werden.

Die DE-A-4 041 358 betrifft ein Verfahren zur Herstellung einer Fotokeramik über elektrofotografische Kopien unter Anwendung färbender Substanzen, wobei man die auf einen Zwischenträger (Meta-Papier oder gummiertes Papier) kopierten, färbenden Substanzen in die glasige oder keramische Oberfläche einbrennt. Als färbende Substanzen werden reine Metallpulver, Legierungspulver und/oder Metalloxidpulver eingesetzt. Die färbenden Substanzen können hierbei auch Bestandteil von Einkomponententonern oder von Entwicklern (Zweikomponententonern) elektrofotografischer Kopierverfahren sein.

Obiges Verfahren, das auf einem Einsintern der hochschmelzenden färbenden Substanzen in die bei niedrigerer Temperatur schmelzende keramische bzw. glasige Oberfläche der zu dekorierenden Keramik- bzw. Glaserzeugnisse basiert,erfordert eine gezielte Abstimmung der färbenden Substanzen (Reaktivität), der Erweichungstemperatur der Keramik- bzw. Glasoberfläche und der Brenntemperatur. Weiterhin ist das erhaltene Dekor in seinem Farbglanz nicht immer optimal. Durch Aufbringen einer zusätzlichen Glasur auf die eingebrannten Farbsubstanzen läßt sich der Glanz erhöhen, jedoch resultiert hieraus durch das Auftragen einer zusätzlichen dicken Glasurschicht eine Reduzierung der Bildschärfe.

JP-8011496 A offenbart Toner zur Herstellung von keramischen Produkten, die aus feinen Teilchen bestehen, die Farbmittel, Flußmittel und Binderharz umfassen. Der spezielle Toner setzt sich zusammen aus 5-50 Gewichtsteilen Farbmittel, 20-80 Gewichtsteilen Flußmittel und 5-15 Gewichtsteilen Binderharz. Die feinen Teilchen beinhalten auch ein Ladungskontrollmittel und ein Formtrennmittel.

EP 0 647 885 A1 offenbart ein Verfahren zur Herstellung von dekorierten Keramik- und Glaserzeugnissen, gemäß dem keramische Farbzusammensetzungen auf ein Transfermittel aufgetragen werden, das mit den keramischen Farbzusammensetzungen beschichtete Transfermittel auf das Keramik- bzw. Glaserzeugnis aufgebracht wird, und, nach Entfernen des Transfermittels, die keramischen Farbzusammensetzungen durch Brennen mit dem Erzeugnis verbunden werden, wobei die keramischen Farbzusammensetzungen feine Teilchen beinhalten, die jeweils keramische Pigmente und Bindemittelharz (e) umfassen und mittels eines elektrofotografischen Reproduktionsverfahrens (Elektrokopierverfahren) auf das Transfermittel aufgetragen werden.

Die der Erfindung zugrunde liegende Aufgabe besteht darin, ein Verfahren zur Herstellung von dekorierten Keramik- und Glaserzeugnissen zu schaffen, das die oben genannten Probleme der im Stand der Technik bekannten Verfahren überwindet. Weiterhin soll ein dekoriertes Keramik- und Glaserzeugnis bereitgestellt werden, das hinsichtlich seiner Glätte, Homogenität, Auflösung, seiner Farbbrillanz und seines Farbglanzes den bekannten Erzeugnissen überlegen ist. Schließlich soll eine keramische Farbzusammensetzung geschaffen werden, die für die Durchführung des obigen Verfahrens und zur Herstellung der gewünschten, dekorierten Keramik- und Glaserzeugnisse geeignet ist.

Die Lösung der obigen Aufgabe(n) besteht in einem Verfahren zur Herstellung von dekorierten Keramik- und Glaserzeugnissen, gemäß dem keramische Farbzusammensetzungen mittels eines elektrofotografischen Reproduktionsverfahrens (Elektrofotokopierverfahren) auf das Keramik- bzw. Glaserzeugnis aufgebracht und durch Brennen mit dem Erzeugnis verbunden werden, das dadurch gekennzeichnet ist, daß die keramischen Farbzusammensetzungen aus feinen Teilchen bestehen, die jeweils feuerfeste Parbkörper (Pigmente), Flußmittel, Bindemittelharz mit einem gewichtsmäßigen Verhältnis feuerfeste Farbkörper : Flußmittel : Bindemittelharz von 30-40 : 10-20 : 40-60 und Lädungssteuerungsmittel umfassen, wobei die Teilchengröße der keramischen Farbzusammensetzungen 1 bis 50 µm ist, und die Größe der Teilchen aus feuerfesten Farbkörpern und Flußmittel 1 bis 20 µm ist.

Die mit dem erfindungsgemäßen Verfahren dekorierten Keramikerzeugnisse betreffen insbesondere die aus Ton oder tonmineralhaltigen Mischungen geformten und gebrannten Erzeugnisse. Weitere bevorzugte Keramikerzeugnisse beinhalten auch Produkte aus sonderkeramischen Werkstoffen, wie z.B. verschiedenste pulverförmige Materialien (z.B. Metalloxide), die nicht silikatischer Natur sind. Beispielhaft können die Keramikerzeugnisse Waren aus Porzellan, Steingut, aber auch aus sonderkeramischen Stoffen, wie Steatit, Rutil, Cordierit und Cermets, darstellen.

Glaserzeugnisse umfassen im Rahmen der Erfindung alle aus einer Glasmasse hergestellten Erzeugnisse oder Erzeugnisse mit einer Glasoberfläche. Insbesondere sollen hierbei Glaserzeugnisse erwähnt werden, die aus einfachen und zusammengesetzten Silikaten von Natrium, Kalium, Calcium, Magnesium, Aluminium, Barium, Zink und Blei bestehen. Diese Gläser sind auf feurig-flammendem Wege entstanden, und die abgekühlten Schmelzen bestehen im wesentlichen aus Siliciumdioxid, Calciumoxid und Natriumoxid, wobei Spezialgläser daneben auch größere Mengen von Bortrioxid, Phosphorpentoxid, Bariumoxid, Kaliumoxid, Lithiumoxid, Zirconoxid oder Bleioxid enthalten können. Siliciumdioxid, Boroxid und Phosphorpentoxid sind die eigentlichen Glasbildner, die auch die Grundlage des Emailles bilden. Dementsprechend sollen unter dem Begriff "Glaserzeugnisse" auch Emailleerzeugnisse verstanden werden.

Die gemäß der Erfindung zu verwendenden feuerfesten Farbkörper (Pigmente) sind temperaturbeständige Farbkörper, die zur Herstellung von farbigen Überzügen und zur feuerbeständigen Einfärbung von Keramik- oder Glaserzeugnissen geeignet sind. Die feuerfesten Farbkörper (Pigmente) im Sinne der Erfindung sind im allgemeinen Farbkörper anorganischer Natur mit ausgezeichneter Feuerfestigkeit.

Beispielhaft können als feuerfeste Farbkörper Verbindungen von Oxiden der Übergangselemente miteinander oder mit Metalloxiden von Elementen der Hauptgruppen des Periodensystems genannt werden. Diese Verbindungen sind im allgemeinen nach dem Spinell-Typ aufgebaut. Die oben erwähnten feuerfesten Farbkörper vom Spinell-Typ werden z.B. durch Mischen von zweiwertigen Metalloxiden (z.B. MgO, ZnO, CoO, FeO) in stöchiometrischem Verhältnis mit einem dreiwertigen Metalloxid (z.B. Al₂O₃, Cr₂O₃, Fe₂O₃) und anschließendem Glühen dieser Mischungen erhalten.

Eine weitere Ausführungsform für erfindungsgemäß einsetzbare feuerfeste Farbkörper sind farblose Verbindungen, wie Zirkonsilikat, Zirkonoxid oder Zinnoxid, in deren Kristallgitter färbende Ionen der Übergangsmetalle eingebaut sind, wie es z.B. in Zirconvanadinblau, in Zirconpraesodymgelb, in Zinnvanadingelb und in Zirconeisenrosa der Fall ist. Weiterhin können als feuerfeste Farbkörper auch sogenannte Einschlußfarbkörper genannt werden, bei denen intensive Pigmente, z.B.

Cadmiumsulphoselenid, von einer farblosen, aber sehr brennstabilen Verbindung, wie Zirconsilikat oder Zinnoxid, umhüllt werden. Die obigen feuerfesten Farbkörper werden allgemein als Verbindungen des Zirkonsilikat-Typs bezeichnet.

Gemäß dem erfindungsgemäßen Verfahren werden in den keramischen Farbzusammensetzungen Flußmittel eingesetzt, die vorzugsweise silikatische Gläser darstellen. Die silikatischen Gläser sind hierbei beispielsweise Blei-Orthosilikate, Blei-Bor-Silikate, Blei-Aluminium-Silikate, Blei-Erdalkali-Silikate, Blei-Alkali-Aluminium-Silikate, aber auch bleifreie Zusammensetzungen, wie z.B. Alkali-Bor-Silikate und Alkali-Bor-Aluminium-Silikate.

Das Flußmittel stellt für den feuerfesten Farbkörper ein Einbindungsmedium, einen sogenannten Fluß, dar, der sich fest mit der Oberfläche des Keramik- bzw. Glaserzeugnisses verbindet, jedoch leichter schmelzbar als die Oberfläche des Keramik- bzw. Glaserzeugnisses ist. Die feuerfesten Farbkörper (Pigmente) und die Flüsse als Bindemittel bilden sogenannte Schmelzfarben. Farbkörper und Flußmittel werden zur Herstellung solcher Schmelzfarben im allgemeinen z.B. in Kugelmühlen fein miteinander vermahlen.

Die gemäß der Erfindung verwendete keramische Farbzusammensetzung wird z.B. hergestellt, indem man die gemahlene Schmelzfarbe (feuerfeste Farbkörper und Flußmittel), das Bindemittelharz und das Ladungssteuerungsmittel innig miteinander vermischt, die erhaltene Mischung in der Schmelze knetet, abkühlt, pulverisiert und zu der gewünschten Teilchengröße klassiert.

In der keramischen Farbzusammensetzung, wie sie in dem erfindungsgemäßen Verfahren eingesetzt wird, beträgt in einer für die Brillanz und Leuchtkraft der Farben besonders vorteilhafte Ausführungsform das gewichtsmäßige Verhältnis feuerfeste Farbkörper : Flußmittel : Bindemittelharz
35 : 15 : 50.

In der keramischen Farbzusammensetzung liegen die feuerfesten Farbkörper, Flußmittel und das Bindemittelharz vorzugsweise in einer Gesamtmenge von mindestens 95 Gew.% vor.

Gemäß der vorliegenden Erfindung enthält die keramische. Farbzusammensetzung (Toner) weiterhin Ladungssteuerungsmittel. Beispiele hierfür sind Ruß, Eisenschwarz, Graphit, Nigrosin, Metallkomplexe von Monoazofarbstoffen, Hansagelb, Benzidingelb und verschiedene Lackpigmente. Die obigen Mittel werden vorzugsweise in einer Menge von 0,01 bis 5 Gew.%, und insbesondere bevorzugt von 0,1 bis 2 Gew.%, in dem Toner verwendet.

Die Teilchengröße des erfindungsgemäß eingesetzten Toners liegt vorzugsweise bei 1 bis 20 µm. Weiterhin weist die Schmelzfarbe, d.h. die Kombination aus feuerfesten Farbkörpern (Pigmenten) und Flußmittel vorzugsweise eine Teilchengröße von 1 bis 10 µm auf.

Als besonders vorteilhaft hat sich eine Tonerteilchengröße von 8 µm bei einer gleichzeitigen Teilchengröße der Schmelzfarbe von 1 bis 5 µm erwiesen.

Die erfindungsgemäß zu verwendenden Bindemittelharze müssen beim späteren Brennvorgang rückstandslos verbrennen, müssen weiterhin in ihrer Elastizität so eingestellt werden, daß sie die gewünschte Menge an feuerfesten Farbkörpern bzw.

Flußmittel aufnehmen können, und besitzen vorzugsweise eine Schmelztemperatur von ungefähr 140°C. Die Sprödigkeit des Harzes und seine Schmelztemperatur können insbesondere durch eine geeignete Gestaltung des Molekulargewichts, der Zusammensetzung und des Vernetzungsgrades eingestellt werden.

Das erfindungsgemäß zu verwendende Bindemittelharz besteht vorzugsweise aus ein oder mehreren (Co)polymeren, aufgebaut aus Vinylmonomeren. Spezielle Beispiele für Vinylmonomere beinhalten: Styrol, ortho-Methylstyrol, metha-Methylstyrol, para-Methylstyrol, para-Methoxystyrol und para-Ethylstyrol; Methacrylsäureester, wie Methylmethacrylat, Ethylmethacrylat, Propylmethacrylat, n-Butylmethacrylat, Isobutylmethacrylat, n-Octylmethacrylat, Dodecylmethacrylat, 2-Ethylhexylmethacrylat, Stearylmethacrylat, Phenylmethacrylat, Dimethylaminoethylmethacrylat und Diethylaminoethylmethacrylat; Acrylsäureester, wie z.B. Methylacrylat, Ethylacrylat, n-Butylacrylat, Isobutylacrylat, Propylacrylat, n-Octylacrylat, Dodecylacrylat, 2-Ethylhexylacrylat, Stearylacrylat, 2-Chloroethylacrylat und Phenylacrylat; Derivate von Acrylsäure und Methacrylsäure, wie Acrylnitril, Methacrylnitril und Acrylamid. Weitere Beispiele sind durch Dicarbonsäuren mit einer Doppelbindung und deren Derivate, wie z.B. Maleinsäure, Monobutylmaleat, Dibutylmaleat, Monomethylmaleat und Dimethylmaleat; Vinylchlorid; Vinylester, wie z.B. Vinylacetat und Vinylbenzoat; Vinylketone, wie z.B. Vinylmethylketon oder Vinylethylketon; und Vinylether, wie z.B. Vinylmethylether, Vinylethylether und Vinylisobutylether, gegeben.

Die obigen Monomere können entweder einzeln oder in einer Mischung von zwei oder mehreren (co)polymerisiert werden. Hierbei ist es besonders bevorzugt, Styrol oder seine Derivate alleine oder in Kombination mit anderen der obigen Monomere zu verwenden. Eine weitere bevorzugte Auswahl stellen die oben genannten Esterderivate dar. Weiterhin können auch Polyurethane, Polyamide, Epoxyharze, Terpenharze, phenolische Harze, aliphatische oder alizyklische Kohlenwasserstoffharze, aromatische Petroleumharze, chlorierte Paraffine und Paraffinwachse geeignet sein. Auch können mehrere der obigen Bindemittelharze in Kombination eingesetzt werden.

Nach dem erfindungsgemäßen Verfahren kann die keramische Farbzusammensetzung bei geometrisch einfach geformten Keramik- bzw. Glaserzeugnissen direkt mittels Elektrokopieren aufgetragen werden. Bei komplizierter geometrischer Gestaltung des Keramik- bzw. Glaserzeugnisses wird hingegen vorzugsweise die keramische Farbzusammensetzung über ein Transfermittel auf das Erzeugnis aufgetragen. Hierbei wird als Transfermittel vorzugsweise ein Papierträger verwendet, der mit Gummi-Arabikum (Dextrin), Polyvinylacetat oder Wachs beschichtet ist. Insbesondere bevorzugt ist ein mit Dextrin beschichteter Papierträger, da sich in diesem Fall auf sehr einfache Weise die Beschichtung zusammen mit der auf das Transfermittel kopierten keramischen Farbzusammensetzung durch Anfeuchten mit Wasser von dem Trägerpapier lösen und auf dem zu bedruckenden Keramik- oder Glaserzeugnis plazieren läßt.

In einer weiteren vorteilhaften Ausgestaltung des erfindungsgemäßen Verfahrens kann die keramische Farbzusammensetzung nach dem Aufbringen auf dem Transfermittel durch einen Klarlack, der beim Brennen rückstandslos verbrennt, zusätzlich fixiert werden. Dadurch wird verhindert, daß sich die keramische Farbzusammensetzung beim Abziehen von dem Transfermittel und beim Plazieren auf die Oberfläche des Keramik- oder Glaserzeugnisses verwischt oder anderweitig beschädigt wird.

Gemäß der Erfindung wird die keramische Farbzusammensetzung auf das Keramik- oder Glaserzeugnis bzw. auf das Transfermittel über ein elektrofotografisches Reproduktionsverfahren aufgebracht. Dieses Verfahren beruht auf fotoelektrischen und elektrostatischen Effekten und wird auch als elektrofotografisches Kopierverfahren (Elektrofotokopierverfahren) bezeichnet.

Das obige Kopierverfahren umfaßt im allgemeinen die Schritte der Erzeugung eines elektrischen latenten Bildes bzw. Ladungsbildes auf einem lichtempfindlichen Aufzeichnungsmaterial, das im allgemeinen ein fotoleitfähiges Material enthält; der darauffolgenden Entwicklung des latenten Bildes bzw. des Ladungsbildes mit der erfindungsgemäß eingesetzten keramischen Farbzusammensetzung, die als Toner fungiert; der Übertragung des erhaltenen Tonerbildes auf das Keramik- oder Glaserzeugnis bzw. das Transfermittel; und, im Falle der Verwendung eines Transfermittels, des Fixierens des Tonerbildes z.B. unter Anwendung von Wärme, Druck oder Lösungsmitteldampf, wodurch eine Kopie erhalten wird. Zum Sichtbarmachen von elektrischen latenten Bildern bzw. Ladungsbildern sind verschiedene Entwicklungsverfahren bekannt, beispielsweise das Magnetbürstenverfahren, das Kaskadenentwicklungsverfahren, das Pelzbürstenverfahren, das Pulverwolkenverfahren, das Kontaktentwicklungsverfahren, das Übersprungentwicklungsverfahren und das Magnet-Dry-Verfahren. Farbige Kopien werden durch mehrmalige, hintereinander durchgeführte Reproduktionsvorgänge erreicht, wobei mehrere keramische Farbzusammensetzungen der entsprechenden Farbe (z.B. Cyan, Magenta, Gelb und Schwarz) verwendet werden.

Für die Durchführung des oben dargestellten elektrofotografischen Reproduktionsverfahrens erweist sich ein Laserdrucker/-kopierer, wie z.B. Canon CLC 350, als sehr vorteilhaft. Hierbei ist es günstig, die Temperatur an der Walze auf etwa 145 bis 150°C einzustellen, und die Laserleistung, die Entladungskorona, das Kontrastpotential und den Tonerauftrag möglichst hoch einzustellen. Die optimalen Verfabrensbedingungen können, in Abhängigkeit von der eingesetzten Kopiervorrichtung, durch einfache Versuche optimiert werden.

Um mit dem erfindungsgemäßen Verfahren eine hohe Farbintensität zu erreichen, ist es vorteilhaft, die als Toner fungierenden Farbzusammensetzungen mit einer hohen Dicke auf das Keramik- oder Glaserzeugnis bzw. das Transfermittel aufzutragen. Üblicherweise liegt die Schichtdicke des Tonerauftrags von vier übereinanderliegenden Farben bei elektrofotografischen Reproduktionsverfahren, wie z.B. dem Laserdrucken, im Bereich von einigen 1/100 mm. Im Zusammenhang mit dem erfindungsgemäßen Verfahren hat es sich jedoch aufgrund der Farbintensität der keramischen Farbzusammensetzungen als vorteilhaft erwiesen, die Schichtdicke des Tonerauftrags auf einen Bereich von 0,1 mm - 3 mm, vorzugsweise 0,3 mm - 0,6 mm, zu erhöhen, wenn vier keramische Farbzusammensetzungen der entsprechenden Farbe (z.B. Cyan, Magenta, Gelb und Schwarz) übereinander gelegt werden.

Bei einer solch hohen Schichtdicke des Tonerauftrags ist es bei Verwendung eines Transfermittels dann besonders vorteilhaft, den Fixiervorgang üblicher, elektrofotografischer Reproduktionsverfahren zu modifizieren. Beim üblichen Kopiervorgang wird zum Fixieren des Toners das mit dem Toner beschichtete Bildempfangsmaterial (z.B. Papier) durch heiße Fixierwalzen gepreßt, um so Toner und Bildempfangsmaterial (Papier) zu verbinden und um den benötigten Glanz zu erreichen. Bei extrem dicken Tonerlagen können jedoch die Farbschichten beim Pressen durch die Walzen plattgedrückt werden, und das Bild wird beschädigt. Weiterhin ist es auch möglich, daß die Wärme beim Fixieren nicht mehr ausreichend durch die dicke Tonerschicht dringt, so daß sich der Toner nicht mehr vollständig mit dem Bildempfangsmaterial (späteres Transfermittel) verbindet, und somit Hohlräume zwischen Toner und Bildempfangsmaterial, z.B. Papier, entstehen. Beim keramischen Brennen bilden sich dann unter diesen Hohlräumen Gase, so daß Blasen entstehen und das gebrannte Keramik- oder Glaserzeugnis fehlerhaft wird. Weiterhin wird häufig beim Fixiervorgang ein Fixierölfilm auf den Heizwalzen verwendet, um das fixierte Material sauber von den Walzen lösen zu können. Dieser Fixierfilm kann jedoch einen späteren Auftrag von Klarlack zum zusätzlichen Fixieren der Farbzusammensetzungen auf dem Transfermittel behindern, wenn er den Lack abstößt.

Die oben beschriebenen, nachteiligen Eigenschaften lassen sich jedoch verhindern, wenn man bei dem elektrofotografischen Reproduktionsvorgang keine heißen Fixierwalzen einsetzt, sondern das mittels der keramischen Farbzusammensetzungen erzeugte Tonerbild nach der Übertragung auf das Transfermittel drucklos unter Anwendung von Wärme fixiert. Hierbei kann man das mit den keramischen Farbzusammensetzungen beschichtete Transfermittel über ein Transportband unter Heizstrahlern oder durch einen Ofen laufen lassen. Als Fixiertemperatur hat sich hierbei ein Wert von 200°C als günstig erwiesen.

Durch Einlesen der Daten des gewünschten, auf dem Keramik- oder Glaserzeugnis aufzubringenden Bildes mittels eines digitalen Farbscanners und Übertragung dieser Daten mittels eines Rechners (Personal Computers) in den Bildspeicher der elektrofotografischen Reproduktionseinrichtung wird vorteilhafterweise dem Benutzer erstmals die Möglichkeit gegeben, auch bei nur sehr geringen herzustellenden Stückzahlen Änderungen, wie z.B. in der Farbabstufung, der Rasterung, vorzunehmen. Auch können alle mittels der heutigen Computertechnologie möglichen Grafiken und/oder Abänderungen direkt auf das Keramik- oder Glaserzeugnis bzw. das Transfermittel übertragen werden.

Nach dem Kopiervorgang und Auftrag der keramischen Farbzusammensetzungen auf das Keramik- oder Glaserzeugnis erfolgt der abschließende Brennschritt in Abhängigkeit von dem Material des Keramik- bzw. Glaserzeugnisses im allgemeinen bei einer Temperatur von 300 bis 2000°C, insbesondere jedoch bei 500 bis 1400°C.

Mit dem oben dargestellten, erfindungsgemäßen Verfahren ist es möglich, die im Stand der Technik bestehenden Nachteile des Siebdruckverfahrens zu überwinden. Es entfällt die bisher notwendige Reinigung von Siebdruckschablonen und die Verwendung von Lösungsmitteln mit den bekannten Nachteilen. Es sind keine großen Klimatisierungsanlagen und Schutzvorrichtungen für das Arbeitspersonal zwingend notwendig, und es besteht somit auch erstmals die Möglichkeit, zum Beispiel in einem Einzelhandelsgeschäft, auf einem mit der erfindungsgemäßen keramischen Zusammensetzung (Toner) arbeitenden Farbkopierer Teller, Porzellanerzeugnisse oder andere Produkte nach den Wünschen des Kunden zu verzieren.

Weiterhin kann bei dem erfindungsgemäßen Verfahren unabhängig von der Stückzahl sehr kostengünstig das gewünschte, aufzubringende Bild erstellt werden. Die Kosten für die Erstellung von Großserien, wie z.B. bei der Fliesenherstellung, werden stark verringert. Auch bei sehr geringen Stückzahlen ist es nunmehr möglich, verschiedene Änderungen, wie z.B. Farbwahl oder Rasterung, vorzunehmen, da die Abbildung im Computer verarbeitbar ist und keine extra neuen Schablonen hergestellt werden müssen. Dadurch ist das erfindungsgemäße Verfahren um vieles einfacher und billiger als die bekannten Siebdruckverfahren.

Gegenüber den bekannten Verfahren zur Herstellung von dekorierten Keramik- und Glaserzeugnissen mittels Elektrokopierverfahren zeichnet sich das erfindungsgemäße Verfahren dadurch aus, daß die Oberfläche der hierbei hergestellten Keramik- und Glaserzeugnisse nicht nur sehr glatt, homogen und ungerastert wirkt, sondern auch bezüglich der Farbe eine hohe Brillanz (Leuchtkraft) und Glanz aufweist.

Demgemäß beinhaltet die Erfindung auch nach dem obigen Verfahren erhältliche, dekorierte Keramik- und Glaserzeugnisse. Diese zeichnen sich gegenüber den durch das bekannte Siebdruckverfahren (oder Offsetdruckverfahren) erhaltenen Produkten durch die folgenden Eigenschaften aus: Die Bildflächen wirken sehr glatt, homogen und ungerastert. Es wird eine höhere Feinheit, Glätte und Auflösung erzielt. Gegenüber den durch die bekannten Elektrokopierverfahren erhaltenen Produkten zeigen die Keramik- und Glaserzeugnisse gemäß der Erfindung nicht nur eine hohe Farbbrillanz, sondern auch einen hohen Farbglanz.

Schließlich betrifft die Erfindung eine keramische Farbzusammensetzung, die aus feinen Teilchen besteht, die jeweils feuerfeste Farbkörper (Pigmente), Flußmittel, Bindemittelharz mit einem gewichtsmäßigen Verhältnis feuerfeste Farbkörper : Flußmittel : Bindemittelharz von 30-40 : 10-20 : 40-60 und Ladungssteuerungsmittel umfassen, wobei die Teilchengröße der keramischen Farbzusammensetzung zwischen 1 bis 50 µm liegt und die Größe der Teilchen aus feuerfesten Farbkörpern und Flußmittel bei 1 bis 20 µm liegt.

Bei den feuerfesten Pigmenten handelt es sich vorzugsweise um Verbindungen des Spinell-Typs oder des Zirconsilikat-Typs.

Die Flußmittel sind weiterhin vorzugsweise silikatische Gläser, die die feuerfesten Pigmente binden und mit diesen die sogenannten Schmelzfarben bilden.

Das Bindemittelharz weist die Eigenschaften auf, daß es rückstandslos verbrennt, eine ausreichende Elastizität aufweist, um die entsprechende Menge an Schmelzfarbe, d.h. feuerfestem Pigment und Flußmittel, zu binden und vorzugsweise einen Schmelzpunkt von etwa 140°C besitzt. Die oben genannten Eigenschaften lassen sich insbesondere über das Molekulargewicht, die Zusammensetzung und den und den Vernetzungsgrad einstellen.

Das Bindemittelharz besteht vorzugsweise aus ein oder mehreren (Co)polymeren, aufgebaut aus vinylgruppenhaltigen Monomeren, und umfaßt insbesondere Polymere oder Copolymere von Styrol oder Derivaten hiervon alleine oder in Kombination mit anderen Vinylmonomeren, oder auch Polyester.

Eine besonders günstige Ausführungsform der keramischen Farbzusammensetzung weist ein Verhältnis feuerfeste Farbkörper : Flußmittel : Bindemittelharz von 35 : 15 : 50 auf.

Die keramische Farbzusammensetzung enthält die feuerfesten Farbkörper, Flußmittel und das Bindemittelharz vorteilhafterweise in einer Gesamtmenge von mindestens 95 Gew.%.

In der keramischen Farbzusammensetzung ist weiterhin das Ladungssteuerungsmittel vorzugsweise in einer Menge von 0,01 bis 5 Gew.%, insbesondere bevorzugt von 0,1 bis 2 Gew.%, vorhanden.

Die Teilchengröße der keramischen Farbzusammensetzung liegt besonders bevorzugt bei 1 bis 20 µm. Weiterhin weisen die Teilchen der Schmelzfarbe, d.h. der Kombination aus feuerfestem Pigment und Flußmittel, vorzugsweise eine Teilchengröße von 1 bis 10 µm auf.

In einer besonders geeigneten Ausführungsform haben die Tonerteilchen eine Größe von 8 µm, und die Schmelzfarben besitzen eine Teilchengröße von 1 bis 5 µm.

Im folgenden wird zur weiteren Erläuterung und zum besseren Verständnis der Erfindung der Ablauf des erfindungsgemäßen Verfahren zur Herstellung dekorierter Keramik- und Glaserzeugnisse beispielhaft nochmals detailliert dargestellt.

Ein Scanner, wie z.B. ein DC 3000 hell, ist mittels einer Datenleitung mit einem Personal Computer, z.B. einem Apple Quadra 950, verbunden. Dieser Personal Computer wiederum ist mittels einer weiteren Datenleitung mit einem Farblaserdrucker verknüpft, der eine Bildspeichereinheit IPU umfaßt. Als Farblaserdrucker wird beispielhaft ein Canon CLC 350 verwendet.

Die auf einem Keramik- oder Glaserzeugnis, z.B. einem Teller, aufzubringende bildliche Darstellung, die z.B. bereits als Fotografie vorliegt, wird über den Scanner aufgenommen. Die entsprechenden Daten werden vom Scanner an den Personal Computer weitergegeben und können dort gegebenenfalls entsprechend den Wünschen des Benutzers geändert werden. Diese Änderungen können die Farbe, die Farbabstufung, Bildausschnittsänderungen und vieles mehr umfassen. Ist ein entsprechendes Bild entworfen, werden diese Daten mittels der Datenleitung an den Farblaserdrucker weitergegeben. Der Farblaserdrucker enthält eine oder mehrere keramische Farbzusammensetzungen der erfindungsgemäßen Art. Entsprechend der im Personal Computer erstellten Vorlage wird ein mit Gummi-Arabikum beschichtetes Papier nacheinander mit den verschiedenen keramischen Farbzusammensetzungen mittels elektrofotografischer Reproduktion beschichtet. Danach wird ein Klarlack auf die auf der Gummi-Arabikum-Beschichtung aufgetragenen keramischen Farbzusammensetzung aufgebracht, damit diese gegen Verwischen oder Beschädigungen geschützt sind. Durch Anfeuchten des Papiers lassen sich die keramischen Farbzusammensetzungen zusammen mit der Schicht aus Gummi-Arabikum von dem Papier lösen und auf das entsprechende Keramik- oder Glaserzeugnis, z.B. einem Teller, in gewünschter Weise auflegen bzw. anbringen. Anschließend wird das Erzeugnis mit den in gewünschter Weise aufgebrachten keramischen Farbzusammensetzungen in einem Ofen in bekannter Weise gebrannt, wodurch die Farben mit der Oberfläche des Erzeugnisses verschmelzen. Der über dieses Verfahren erhältliche bedruckte Teller weist ein Dekor auf, das bezüglich seiner Homogenität, Glätte, Auflösung, Brillanz und Glanz ausgezeichnet ist.

## Patentansprüche

1. Verfahren zur Herstellung von dekorierten Keramik- und Glaserzeugnissen, gemäß dem keramische Farbzusammensetzungen mittels eines elektrofotografischen Verfahrens (Elektrokopierverfahren) auf das Keramik- bzw. Glaserzeugnis aufgebracht und durch Brennen mit dem Erzeugnis verbunden werden, **dadurch gekennzeichnet, daß** die keramischen Farbzusammensetzungen aus feinen Teilchen bestehen, die jeweils feuerfeste Farbkörper (Pigmente), Flußmittel, Bindemittelharz mit einem gewichtsmäßigen Verhältnis feuerfeste Farbkörper : Flußmittel : Bindemittelharz von 30-40 : 10-20 : 40-60 und Ladungssteuerungsmittel umfassen, wobei die Teilchengröße der keramischen Farbzusammensetzungen 1 bis 50 µm ist, und die Größe der Teilchen aus feuerfesten Farbkörpern und Flußmittel 1 bis 20 µm ist.

2. Verfahren nach/Anspruch 1, **dadurch gekennzeichnet, daß** das gewichtsmäßige Verhältnis feuerfeste Farbkörper : Flußmittel : Bindemittelharz in den keramischen Farbzusammensetzungen
35 : 15 : 50 beträgt.

3. Verfahren nach Anspruch 1 oder 2, **dadurch gekennzeichnet, daß** die Gesamtmenge an feuerfesten Farbkörpern, Flußmittel und Bindemittelharz in den keramischen Farbzusammensetzungen mindestens 95 Gew.% ist.

4. Verfahren nach einem oder mehreren der vorhergehenden Ansprüche, **dadurch gekennzeichnet, daß** die Teilchengröße der keramischen Farbzusammensetzungen 1 bis 20 µm ist.

5. Verfahren nach einem oder mehreren der vorhergehenden Ansprüche, **dadurch gekennzeichnet, daß** die Größe der Teilchen aus feuerfesten Farbkörpern und Flußmittel 1 bis 10 µm ist.

6. Verfahren nach einem oder mehreren der vorhergehenden Ansprüche, **dadurch gekennzeichnet, daß** die Teilchengröße der keramischen Farbzusammensetzungen 8 µm ist, und die Größe der Teilchen aus keramischen Farbkörpern und Flußmittel 1 bis 5 µm beträgt.

7. Verfahren nach einem oder mehreren der vorhergehenden Ansprüche, **dadurch gekennzeichnet, daß** die keramischen Farbzusammensetzungen über ein Transfermittel auf das Keramik- oder Glaserzeugnis aufgebracht werden.

8. Verfahren nach einem oder mehreren der vorhergehenden Ansprüche, **dadurch gekennzeichnet, daß** die keramischen Farbzusammensetzungen mittels eines Laserdruckers/-kopierers auf das Keramik- oder Glaserzeugnis bzw. das Transfermittel aufgetragen werden.

9. Verfahren nach einem oder mehreren der vorhergehenden Ansprüche, **dadurch gekennzeichnet, daß** die keramischen Farbzusammensetzungen in einer Schichtdicke von 0,1 mm bis 3 mm, vorzugsweise 0,3 mm bis 0,6 mm, auf das Keramik- oder Glaserzeugnis bzw. das Transfermittel aufgetragen werden.

10. Verfahren nach Anspruch 9, **dadurch gekennzeichnet, daß** die keramischen Farbzusammensetzungen nach der Übertragung auf das Transfermittel drucklos unter Anwendung von Wärme fixiert werden.

11. Verfahren nach einem oder mehreren der vorhergehenden Ansprüche, **dadurch gekennzeichnet, daß** die keramischen Farbzusammensetzungen bei einer Temperatur im Bereich von 300 bis 2000°C, insbesondere bevorzugt bei 500 bis 1400°C, gebrannt werden.

12. Keramische Farbzusammensetzung, **dadurch gekennzeichnet, daß** sie aus feinen Teilchen besteht, die jeweils feuerfeste Farbkörper (Pigmente), Flußmittel, Bindemittelharz mit einem gewichtsmäßiger Verhältnis feuerfeste Farbkörper : Flußmittel : Bindemittelharz von 30-40 : 10-20 : 40-60 und Ladungssteuerungsmittel umfassen, wobei die Teilchengröße der keramischen Farbzusammensetzung 1 bis 50 µm ist, und die Größe der Teilchen aus feuerfesten Farbkörpern und Flußmittel 1 bis 20 µm ist.

13. Keramische Farbzusammensetzung nach Anspruch 12, **dadurch gekennzeichnet, daß** das gewichtsmäßige Verhältnis feuerfeste Farbkörper : Flußmittel : Bindemittelharz 35 : 15 : 50 beträgt.

14. Keramische Farbzusammensetzung nach Anspruch 12 oder 13, **dadurch gekennzeichnet, daß** die Gesamtmenge an feuerfesten Farbkörpern, Flußmittel und Bindemittelharz mindestens 95 Gew.% ist.

15. Keramische Farbzusammensetzung nach einem oder mehreren der Ansprüche 12 bis 14, **dadurch gekennzeichnet, daß** die Teilchengröße der keramischen Farbzusammensetzung 1 bis 20 µm ist.

16. Keramische Farbzusammensetzung nach einem oder mehreren der vorhergehenden Ansprüche 12 bis 15, **dadurch gekennzeichnet, daß** die Größe der Teilchen aus feuerfesten Farbkörpern und Flußmittel 1 bis 10 µm ist.

17. Keramische Farbzusammensetzung nach einem oder mehreren der vorhergehenden Ansprüche 12 bis 16, **dadurch gekennzeichnet, daß** die Teilchengröße der keramischen Farbzusammensetzung 8 µm ist, und die Größe der Teilchen aus keramischen Farbkörpern und Flußmittel 1 bis 5 µm beträgt.

## Claims

1. Process for producing decorated ceramic and glass products, according to which ceramic colour compositions are applied to the ceramic or glass product by means of an electrophotographic process (electrocopying process) and are joined to the product by baking, **characterised in that** the ceramic colour compositions consist of fine particles, which include in each case refractory colouring bodies (pigments), fluxing agent, binder resin having a weight ratio refractory colouring body : fluxing agent: binder resin of 30-40 : 10-20 : 40-60 and charge control agent, wherein the particle size of the ceramic colour compositions is 1 to 50 µm, and the size of the particles made from refractory colouring bodies and fluxing agent is 1 to 20 µm.

2. Process according to claim 1, **characterised in that** the weight ratio refractory colouring bodies : fluxing agent: binder resin in the ceramic colour compositions is 35 : 15 : 50.

3. Process according to claim 1 to 2, **characterised in that** the total quantity of refractory colouring bodies, fluxing agent and binder resin in the ceramic colour compositions is at least 95 wt.%.

4. Process according to one or more of the preceding claims, **characterised in that** the particle size of the ceramic colour compositions is 1 to 20 µm.

5. Process according to one or more of the preceding claims, **characterised in that** the size of the particles made from refractory colouring bodies and fluxing agent is 1 to 10 µm.

6. Process according to one or more of the preceding claims, **characterised in that** the particle size of the ceramic colour compositions is 8 µm, and the size of the particles made from ceramic colouring bodies and fluxing agent is 1 to 5 µm.

7. Process according to one or more of the preceding claims, **characterised in that** the ceramic colour compositions are applied to the ceramic or glass product via a transfer agent.

8. Process according to one or more of the preceding claims, **characterised in that** the ceramic colour compositions are applied to the ceramic or glass product or the transfer agent by means of a laser printer/laser copier.

9. Process according to one or more of the preceding claims, **characterised in that** the ceramic colour compositions are applied to the ceramic or glass product or the transfer agent in a layer thickness of 0.1 mm to 3 mm, preferably 0.3 mm to 0.6 mm.

10. Process according to claim 9, **characterised in that** the ceramic colour compositions are fixed without pressure using heat after transferring to the transfer agent.

11. Process according to one or more of the preceding claims, **characterised in that** the ceramic colour compositions are baked at a temperature in the range from 300 to 2,000°C, in particular preferably at 500 to 1,400°C.

12. Ceramic colour composition, **characterised in that** it consists of fine particles, which include in each case refractory colouring bodies (pigments), fluxing agent, binder resin having a weight ratio refractory colouring body : fluxing agent: binder resin of 30-40 : 10-20 : 40-60 and charge control agent, wherein the particle size of the ceramic colour composition is 1 to 50 µm, and the size of the particles made from refractory colouring bodies and fluxing agent is 1 to 20 µm.

13. Ceramic colour composition according to claim 12, **characterised in that** the weight ratio refractory colouring body : fluxing agent: binder resin is 35 : 15 : 50.

14. Ceramic colour composition according to claim 12 or 13, **characterised in that** the total quantity of refractory colouring bodies, fluxing agent and binder resin is at least 95 wt.%.

15. Ceramic colour composition according to one or more of claims 12 to 14, **characterised in that** the particle size of the ceramic colour composition is 1 to 20 µm.

16. Ceramic colour composition according to one or more of the preceding claims 12 to 15, **characterised in that** the size of the particles made from refractory colouring bodies and fluxing agent is 1 to 10 µm.

17. Ceramic colour composition according to one or more of the preceding claims 12 to 16, **characterised in that** the particle size of the ceramic colour composition is 8 µm, and the size of the particles made from ceramic colouring bodies and fluxing agent is 1 to 5 µm.

## Revendications

1. Procédé pour la fabrication d'objets décorés en céramique et en verre, selon lequel des compositions colorées céramiques sont appliquées au moyen d'un procédé électrophotographique (électrocopie) sur l'objet en céramique ou en verre et sont liées avec l'objet par calcination, **caractérisé en ce que** les compositions colorées céramiques sont constituées de particules fines, qui comprennent à chaque fois des corps colorants réfractaires (pigments), des fluidifiants, une résine liante avec un rapport pondéral corps colorants réfractaires : fluidifiants : résine liante de 30-40 : 10-20 : 40-60 et des agents de réglage de la charge, la taille des particules des compositions colorées céramiques étant de 1 à 50 µm et la taille des particules en corps colorants réfractaires et en fluidifiants étant de 1 à 20 µm.

2. Procédé selon la revendication 1, **caractérisé en ce que** le rapport pondéral corps colorants réfractaires : fluidifiants : résine liante dans les compositions colorées céramiques est de 35 : 15 : 50.

3. Procédé selon la revendication 1 ou 2, **caractérisé en ce que** la quantité totale en corps colorants réfractaires, fluidifiants et résine liante dans les compositions colorées céramiques est d'au moins 95 % en poids.

4. Procédé selon l'une ou plusieurs des revendications précédentes, **caractérisé en ce que** la taille des particules des compositions colorées céramiques est de 1 à 20 µm.

5. Procédé selon l'une ou plusieurs des revendications précédentes, **caractérisé en ce que** la taille des particules en corps colorants réfractaires et en fluidifiants est de 1 à 10 µm.

6. Procédé selon l'une ou plusieurs des revendications précédentes, **caractérisé en ce que** la taille des particules des compositions colorées céramiques est de 8 µm et la taille des particules en corps colorants céramiques et en fluidifiants est de 1 à 5 µm.

7. Procédé selon l'une ou plusieurs des revendications précédentes, **caractérisé en ce que** les compositions colorées céramiques sont appliquées via un agent de transfert sur l'objet en céramique ou en verre.

8. Procédé selon l'une ou plusieurs des revendications précédentes, **caractérisé en ce que** les compositions colorées céramiques sont appliquées au moyen d'une imprimante à laser/d'un copieur à laser sur l'objet en céramique ou en verre ou l'agent de transfert.

9. Procédé selon l'une ou plusieurs des revendications précédentes, **caractérisé en ce que** les compositions colorées céramiques sont appliquées en une épaisseur de couche de 0,1 à 3 mm, de préférence de 0,3 à 0,6 mm, sur l'objet en céramique ou en verre ou l'agent de transfert.

10. Procédé selon la revendication 9, **caractérisé en ce que** les compositions colorées céramiques sont fixées après le transfert sur l'agent de transfert sans pression, en utilisant de la chaleur.

11. Procédé selon l'une ou plusieurs des revendications précédentes, **caractérisé en ce que** les compositions colorées céramiques sont calcinées à une température dans la plage de 300 à 2000 °C, de manière particulièrement préférée de 500 à 1400 °C.

12. Composition colorée céramique **caractérisée en ce qu'**elle est constituée de particules fines, qui comprennent à chaque fois des corps colorants réfractaires (pigments), des fluidifiants, une résine liante avec un rapport pondéral corps colorants réfractaires : fluidifiants : résiné liante de 30-40 : 10-20 : 40-60 et des agents de réglage de la charge, la taille des particules de la composition colorée céramique étant de 1 à 50 µm et la taille des particules en corps colorants réfractaires et en fluidifiants étant de 1 à 20 µm.

13. Composition colorée céramique selon la revendication 12, **caractérisée en ce que** le rapport pondéral corps colorants réfractaires : fluidifiants : résine liante est de 35 : 15 : 50.

14. Composition colorée céramique selon la revendication 12 ou 13, **caractérisée en ce que** la quantité totale en corps colorants réfractaires, fluidifiants et résine liante est d'au moins 95 % en poids.

15. Composition colorée céramique selon l'une ou plusieurs des revendications 12 à 14, **caractérisée en ce que** la taille des particules de la composition colorée céramique est de 1 à 20 µm.

16. Composition colorée céramique selon l'une ou plusieurs des revendications précédentes 12 à 15, **caractérisée en ce que** la taille des particules en corps colorants réfractaires et en fluidifiants est de 1 à 10 µm.

17. Composition colorée céramique selon l'une ou plusieurs des revendications précédentes 12 à 16, **caractérisée en ce que** la taille des particules de la composition colorée céramique est de 8 µm et la taille des particules en corps colorants céramiques et en fluidifiants est de 1 à 5 µm.
